# DEMANDE DE BREVET EUROPEEN

(11) **EP 0 872 216 A1**
(43) Date de publication de la demande: **21.10.1998**
(21) Numéro de dépôt: 98106709.3
(22) Date de dépôt: 14.04.1998
(51) Int. Cl.: A61C 1/00, A61C 13/265, A61C 8/00, A61C 13/30

(54) **Attachement pour prothèse dentaire**

(30) Priorité: 18.04.1997 CH 911/97
(71) Demandeur: Unor AG (Unor SA) (Unor Ltd), 8952 Schlieren (CH)
(72) Inventeur: Püntener, Erhard, 8122 Binz (CH)
(74) Mandataire: Coutts, William Robert

(57) **Abrégé**

Un attachement (4, 5, 6, 7, 8) pour prothèse dentaire (10) à extraction réversible comprend l'utilisation de céramique de couleur dentaire.

## Description

La présente invention concerne un attachement pour prothèse dentaire selon préambule de la revendication 1.

Il est connu en médecine dentaire, des éléments de liaison venant s'interposer entre une mâchoire, ou une ou plusieurs dents restantes ou des dents piliers préalablement préparées, et une prothèse dentaire. Ces éléments de liaison, appelés attachements dans toute la suite, servent à améliorer la tenue mécanique d'une telle prothèse dentaire.

Une première partie d'un tel attachement est solidaire de façon commune d'une couronne ou bridge ou coiffe radiculaire, lorsqu'il existe une racine dentaire naturelle, ou encore d'un implant lorsqu'il n'existe plus de racine dans la mâchoire. Une deuxième partie d'un tel attachement est solidaire de la prothèse dentaire.

La liaison, telle que réalisée par ce type d'attachement, entre d'une part la mâchoire, ou la ou les dents restantes, ou les dents piliers, et d'autre part la prothèse dentaire, n'est pas fixe, mais amovible de façon réversible par simple traction de l'utilisateur. Le mode de fonctionnement réversible d'un tel attachement, peut être :
- d'un type dit à rétention, comparable au fonctionnement d'un bouton à pression ;
- d'un type à friction, dans lequel l'ajustement de deux surfaces tronconiques détermine une liaison fricative également réversible par traction.
- une combinaison des deux types ci-dessus.

La fixation de ladite première partie d'un tel attachement, appelée aussi base d'attachement, est décrite plus en détail ci-après, pour les deux cas précités dépendant de l'existence ou de l'absence d'une racine dans la mâchoire.

Dans le cas d'une racine dentaire naturelle, un tenon radiculaire, généralement en métal mais existant aussi, de manière connue, en matériau céramique, est placé dans la racine dentaire.

Si ce tenon radiculaire est métallique, la coiffe radiculaire est coulée ou brasée sur le tenon. Dans le cas d'un brasage, la coulée est réalisée préalablement.

Si le tenon radiculaire est en matériau céramique, il est d'abord soumis à un traitement superficiel de dorage, permettant de façon connue de fixer ladite première partie de l'attachement par coulée de raccord ou par brasage.

Le tenon radiculaire, la coiffe radiculaire et ladite première partie de l'attachement sont ensuite scellés à l'aide d'un ciment dentaire dans la racine dentaire naturelle.

Dans le cas où il n'y a pas de racine dentaire disponible, on peut fixer un implant dans la mâchoire. Un tel implant sert de support de la première partie de l'attachement. Dans cet implant, on peut visser une pièce connue sous le nom d'abutment ou superstructure d'implant, qui fait la liaison avec la prothèse. Dans ce domaine des implants dentaires, la prothèse peut être :
- amovible, par exemple par liaison rétentive ou fricative,
- fixe,
- amovo-inamovible.

Il est également connu des tenons radiculaires céramiques (zircon), qui toutefois ne peuvent pas être fixés, par exemple par brasage, avec la coiffe radiculaire ou plus généralement avec la base d'attachement. De tels tenons radiculaires en céramique servent uniquement de support pour la construction d'un faux moignon destiné à recevoir une couronne.

Les attachements sont généralement réalisés, pour des raisons de biocompatibilité ainsi que des exigences en matière de caractéristiques mécaniques des parties d'attachements, en alliages de métaux précieux, en titane, ou en alliages de titane. Des pièces isolées sont aussi réalisées en matières plastiques synthétiques.

Les attachements utilisés jusqu'à présent présentent plusieurs inconvénients.

Les tenons radiculaires, les attachements et les brasures sont réalisés obligatoirement dans des métaux ou compositions métalliques différents. La présence simultanée de ces différents composants dans le milieu buccal, baigné par les sécrétions salivaires, peut avoir pour conséquence des effets galvaniques indésirables, dits effets de pile, et entraîner des irritations ou intoxications. La couleur jaune ou grise des métaux utilisés constitue également un inconvénient d'ordre esthétique. Les contraintes d'épaisseur imposent parfois des opérations de recouvrement en céramique ou incrustation résine pour masquer la couleur métallique de façon satisfaisante. Les remèdes apportés jusqu'à présent consistent, sous certaines conditions, en une couche de vernis opaque supplémentaire, rappelant une couche de peinture. Mais de telles opérations de recouvrement entraînent des résultats esthétiques insatisfaisants. Par ailleurs, les surépaisseurs se traduisent par un inconfort dans la cavité buccale, en particulier pour la langue qui n'a plus qu'une place réduite. La facilité et la clarté d'expression verbale du sujet peuvent aussi être affectées négativement.

L'invention se propose de remédier à ces inconvénients par les moyens décrits dans la partie caractérisante de la revendication 1.

En lieu et place des alliages métalliques, un matériau céramique de couleur dentaire est utilisé pour au moins l'une des parties ou pièces constituant l'attachement.

Les progrès réalisés dans les matériaux céramiques ont permis d'améliorer leurs caractéristiques mécaniques, ce qui autorise leur utilisation dans d'autres pièces ou parties d'attachement que le tenon radiculaire.

Dans une forme particulière de réalisation de l'invention, la première partie de l'attachement ou base d'attachement est fixé par le praticien sur une racine dentaire ou un implant.

Dans une forme particulière de réalisation de l'invention, dans laquelle la base d'attachement prend appui sur une racine dentaire surmontée d'une coiffe radiculaire, l'attachement et plus exactement sa base fait partie de la coiffe radiculaire. Celle-ci est fixée en bouche par des moyens connus en soi. Non seulement le tenon radiculaire est en céramique, mais aussi la coiffe radiculaire, celle-ci étant d'une seule pièce avec la base d'attachement. La deuxième partie de l'attachement, amovible par traction, et fixé sur la base d'attachement par un dispositif rétentif, comprenant comme on l'a vu, soit un élément à rétention, soit un élément à friction ou une combinaison des deux.

Comme la base d'attachement fait partie de la coiffe radiculaire, on évite entre autres une opération de brasage. Par ailleurs, il est possible de réaliser des coiffes, et donc des bases d'attachement, en matériau céramique présentant un état de surface particulièrement lisse. Ceci permet de diminuer l'usure entre la deuxième partie de l'attachement et l'ensemble constitué par la coiffe et la base d'attachement. En effet, une pièce brasée doit être polie pour présenter un état de surface correct. L'invention permet ainsi d'éviter une opération de polissage. Cet avantage est également vrai dans le cas où la base d'attachement, en l'absence de racine, se trouve sur un implant. Un tel implant est prolongé par une superstructure d'implant, qui peut être, selon l'invention, réalisé en matériau céramique. Outre l'avantage esthétique, ceci permet de diminuer l'usure avec la deuxième partie de l'attachement, car la surface est plus lisse.

Dans une forme particulière de réalisation de l'invention, l'attachement peut être rendu solidaire de la coiffe radiculaire par un procédé de traitement de surface tel que dorure, permettant un brasage ou une coulée de raccord.

Dans une forme particulière de réalisation de l'invention, dans laquelle l'attachement contient une coiffe radiculaire, cet attachement comprend en outre un tenon radiculaire en matériau céramique, connu en soi. L'ensemble comprenant cette coiffe radiculaire et ce tenon radiculaire en matériau céramique est fixé dans la racine dentaire et ensuite revêtu d'un matériau céramique ou d'une résine.

Dans une forme particulière de réalisation de l'invention, l'attachement comprend un dispositif rétentif en conjonction avec un tenon radiculaire en matériau céramique. Ce tenon radiculaire en matériau céramique est fixé dans la racine dentaire.

Dans une forme particulière de réalisation de l'invention, l'attachement comprend un dispositif rétentif mais en conjonction avec une superstructure d'implant, tous deux en matériau céramique. Cette superstructure d'implant est fixée dans un implant dentaire, qui peut être lui-même en céramique, alors que dans l'art antérieur le matériau le plus couramment utilisé était le titane.

Dans une forme particulière de réalisation de l'invention, l'attachement comprend un élément à rétention ou à friction. Par élément à rétention, il faut comprendre un mécanisme semblable à un bouton-pression, dans lequel une partie mâle est enclipsée sur une partie femelle. De tels mécanismes à rétention ou à friction sont connus en médecine dentaire, avec une force de séparation normalisée entre 600 gf et 1000 gf.

Dans une forme particulière de réalisation de l'invention, l'attachement comprenant le tenon radiculaire en céramique est vendu préfabriqué. Il est fixé dans la racine dentaire par le dentiste, et revêtu ensuite d'un matériau céramique ou résine également par le dentiste.

Dans une forme particulière de réalisation de l'invention, des parties de l'attachement sont standardisées de façon à être échangées de façon courante par un praticien, et ce avec un matériel minimal. Ceci présente l'avantage d'une réduction de coût par automatisation des opérations.

D'autres avantages de l'invention apparaîtront à la lecture de la description détaillée qui va suivre, en référence au dessin ci-annexé dans lequel :
- la figure 1 montre une coupe partielle d'un exemple de réalisation ;
- la figure 2 montre le même exemple, la deuxième partie de l'attachement étant enlevée ;
- la figure 3 montre un second exemple, avec implant :
- la figure 4 est analogue à la figure 2, mais avec coiffe intégrée à la base d'attachement ;
- la figure 5 montre une forme de réalisation de l'attachement avec élément à rétention ;
- la figure 6 montre une forme de réalisation de l'attachement avec élément à friction.

Dans une mâchoire 1, une racine dentaire 2 reçoit un tenon radiculaire 4. Celui-ci est fixé à une coiffe radiculaire 5, ci-après appelée coiffe 5. Cette coiffe 5 est elle-même solidaire d'une base d'attachement 6, comprenant une rotule et formant la première partie d'un attachement selon l'invention.

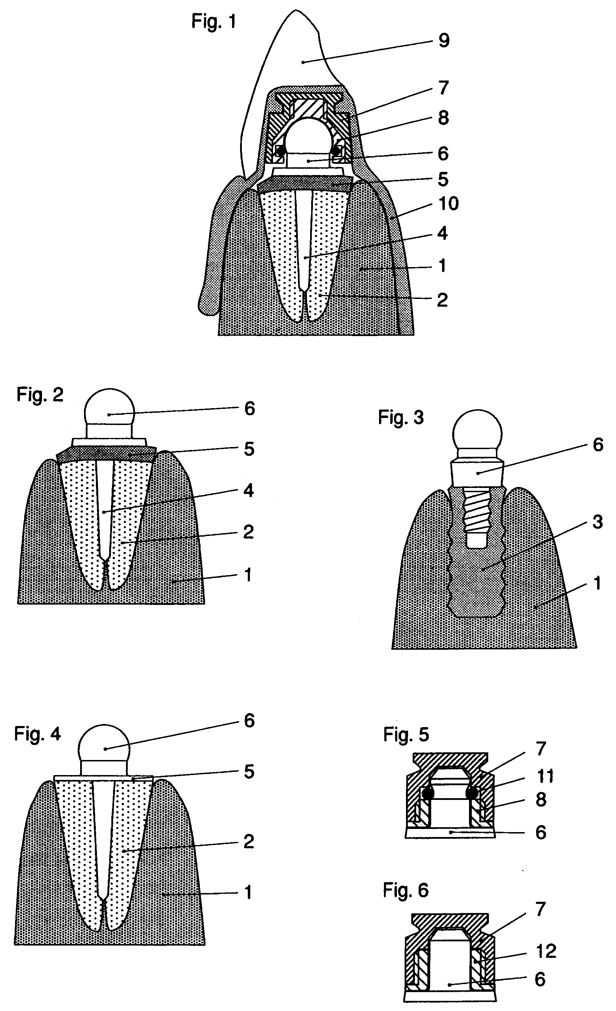

La deuxième partie de l'attachement selon la figure 1 est femelle, et comprend un boîtier 7 vissé sur un corps 8. Le corps 8 et la rotule forment un dispositif rétentif, du type à rétention.

La prothèse 10, représentée en coupe partielle, comprend une dent 9.

L'utilisation de matériau céramique de couleur dentaire permet d'éviter des opérations de dorage, brasage et polissage entre les différentes parties ou pièces de l'attachement reliant la mâchoire 1 et la prothèse 10.

Lorsque l'on exerce une force de séparation sur la prothèse, les deux parties de l'attachement se séparent de façon réversible. La figure 2 montre la base d'attachement 6 restant fixée à la mâchoire 1.

La figure 3 illustre le cas où, la racine ayant disparu, un implant 3 est fixé dans la mâchoire 1.

La figure 4 montre le cas particulier où une coiffe 5 est intégrée à la base d'attachement 6.

Les figures 5 et 6 illustrent les deux possibilités principales de dispositif.

La figure 5 montre un exemple d'élément à rétention, dans lequel un clips annulaire 11 maintient en position un corps 8 sur la base 6 de l'attachement. Dans cet exemple, la base 6 présente une partie mâle non sphérique, contrairement aux figures 1, 2, 3 et 4, où elle était constituée d'une rotule.

Un boîtier 7 est fixé sur le corps 8.

La figure 6 montre un exemple d'élément à friction, ne faisant pas intervenir de clips, mais où la base 6 présente une excroissance quasi cylindrique sur laquelle vient s'insérer, par friction, un élément à friction 12, solidaire lui aussi du boîtier 7.

## Revendications

1. Attachement (4, 5, 6, 7, 8) pour prothèse dentaire (10), assurant la liaison entre une mâchoire (1) et une telle prothèse (10), caractérisé en ce qu'un matériau céramique de couleur dentaire est utilisé dans cet attachement (4, 5, 6, 7, 8).

2. Attachement selon revendication 1, caractérisé en ce qu'il se trouve sur une racine dentaire (2) ou sur un implant (3).

3. Attachement selon revendication 1, caractérisé en ce qu'il contient une coiffe radiculaire (5) surmontant un tenon radiculaire (4).

4. Attachement selon revendication 1, caractérisé en ce qu'il peut être fixé sur une coiffe radiculaire (5).

5. Attachement selon revendication 3, caractérisé en ce qu'il contient un tenon radiculaire (4) en matériau céramique, connu en soi, qui est fixé dans la racine dentaire (2) et consolidé par une enveloppe céramique.

6. Attachement selon revendication 2, caractérisé en ce qu'il comprend un dispositif rétentif (7, 8, 11, 12) associé à un tenon radiculaire en matériau céramique (4) installé dans la racine dentaire (2).

7. Attachement selon revendication 2, caractérisé en ce qu'il comprend un élément à rétention (11) ou à friction (12).

8. Attachement selon revendication 5, caractérisé en ce qu'il est préfabriqué.

9. Attachement selon revendication 5, caractérisé en ce que des parties de l'attachement (4, 5, 6, 7, 8, 11, 12) peuvent être démontées de la prothèse (10) et remontées sur cette prothèse (10) au moyen d'instruments spéciaux.
